# EUROPÄISCHE PATENTSCHRIFT

(11) **EP 0 459 187 B1**
(45) Veröffentlichungstag und Bekanntmachung des Hinweises auf die Patenterteilung: **14.12.1994**
(21) Anmeldenummer: 91107451.6
(22) Anmeldetag: 08.05.1991
(51) Int. Cl.: B60Q 1/04

(54) **Scheinwerfer für Kraftfahrzeuge**
Vehicle head lamp
Phare pour véhicule

(30) Priorität: 01.06.1990 DE 4017701
(43) Veröffentlichungstag der Anmeldung: 04.12.1991
(73) Patentinhaber: ROBERT BOSCH GMBH, 70442 Stuttgart (DE)
(72) Erfinder: Schmidt, Hans-Joachim, W-7257 Ditzingen 5 (DE)

(56) Entgegenhaltungen:
- EP-A- 0 239 440
- DE-C- 3 540 724

## Beschreibung

Die Erfindung betrifft einen Scheinwerfer für Kraftfahrzeuge nach der Gattung des Anspruchs 1.

Ein solcher Scheinwerfer ist durch die EP-A-0 239 440 bekannt. Dieser Scheinwerfer weist eine Halterung in Form eines Gehäuses auf, die über mehrere Lagerstellen an einem Karosserieteil des Kraftfahrzeugs festlegbar ist. Wenigstens einer Lagerstelle ist ein Halteelement zugeordnet, über das die Halterung am Karosserieteil zur Anlage kommt. Das Halteelement ist in einer Aufnahme der Halterung in verschiedenen Längsstellungen festlegbar. Durch das Halteelement tritt ein Befestigungselement in Form einer Schraube mit radialem Spiel hindurch, das sich am Halteelement abstützt und durch das die Halterung am Karosserieteil befestigbar ist. Das Halteelement weist dabei einen sich quer zu dessen Verstellrichtung erstreckenden Schlitz auf, in den eine gekrümmte Blattfeder eingeschoben ist, deren Enden bei nicht angezogener Schraube zunächst innerhalb des Halteelements angeordnet sind, so daß das Halteelement in der Aufnahme entlang seiner Verstellrichtung bewegbar ist. Der Scheinwerfer wird entlang der Verstellrichtung des Halteelements korrekt ausgerichtet, wobei sich das Halteelement in der Aufnahme entsprechend ausrichtet. In dieser Stellung des Halteelements wird die Schraube angezogen, wodurch die Blattfeder flach gedrückt wird und deren Enden aus dem Halteelement herausragen und sich in der Aufnahme verkrallen, so daß das Halteelement in der Aufnahme festgelegt ist. Bei einem Ausbau des Scheinwerfers wird die Schraube gelöst, wobei sich damit die Blattfeder wieder krümmt und das Halteelement nicht mehr in der Aufnahme festgelegt ist. Beim nachfolgenden Wiedereinbau des Scheinwerfers muß dieser daher erneut in Verstellrichtung des Halteelements ausgerichtet werden, was einen großen Zeitaufwand erfordert.

Der erfindungsgemäße Scheinwerfer mit den Merkmalen des Anspruchs 1 hat demgegenüber den Vorteil, daß das Halteelement in der Aufnahme unabhängig vom Befestigungselement festlegbar ist, so daß zu einem Ausbau des Scheinwerfers lediglich das Befestigungselement gelöst zu werden braucht, während das Halteelement in seiner einmal festgelegten Stellung in der Aufnahme verbleibt. Bei einem nachfolgenden Wiedereinbau des Scheinwerfers ist dieser daher in Verstellrichtung des Halteelements ohne erneute Einstellung wieder korrekt ausgerichtet.

In den abhängigen Ansprüchen sind vorteilhafte Ausgestaltungen und Weiterbildungen der Erfindung angegeben. Durch die Ausgestaltung gemäß Anspruch 4 ist eine sichere Fixierung des Halteelements erreicht. Eine verliersichere Verbindung des Halteelements mit der Aufnahme ist durch die Ausbildung gemäß Anspruch 5 gegeben Durch die Weiterbildung gemäß Anspruch 7 ist gewährleistet, daß das Halteelement auch ohne daß es während der Scheinwerfermontage eingesehen werden kann sicher festlegbar ist.

### Zeichnung

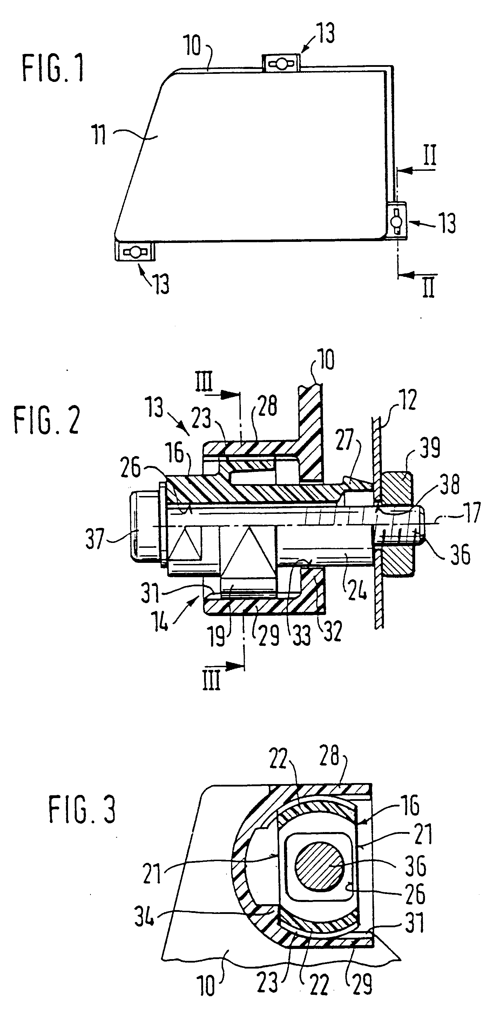

Ein Ausführungsbeispiel der Erfindung ist in der Zeichnung dargestellt und in der nachfolgenden Beschreibung näher erläutert. Es zeigen Figur 1 einen Scheinwerfer in stark vereinfachter Darstellung in der Vorderansicht, Figur 2 den Scheinwerfer abschnittsweise als Schnitt entlang Linie II-II in Figur 1 und Figur 3 den Scheinwerfer abschnittsweise als Schnitt entlang Linie III-III in Figur 2.

### Bechreibung des Ausführungsbeispiels

Ein in Figur 1 dargestellter Scheinwerfer für Kraftfahrzeuge weist ein Gehäuse 10 aus Kunststoff auf, dessen Vorderseite mit einer Lichtscheibe 11 abgedeckt ist, wobei im Gehäuse 10 ein nicht dargestellter Reflektor mit einer Lichtquelle angeordnet ist. Das Gehäuse 10 dient als Halterung zur Befestigung des Scheinwerfers an einem Karosserieteil, beispielsweise am Frontend 12 des Kraftfahrzeugs. Das Gehäuse 10 ist über mehrere, im Ausführungsbeispiel drei an seinen Außenwänden angeordnete Lagers teilen 13 am Frontend 12 festlegbar. An jeder Lagerstelle 13 ist an den Außenwänden eine nach außen abstehende Aufnahme 14 angeformt, in die ein buchsenartiges Halteelement 16 aus Kunststoff einsetzbar ist, über das das Gehäuse 10 etwa in Richtung der Längsachse 17 des Kraftfahrzeugs am Frontend 12 zur Anlage kommt.

Das Halteelement 16 ist in Richtung seiner zur Längsachse 17 des Kraftfahrzeugs parallelen Längsachse in die Aufnahme 14 einschiebbar. Das Halteelement 16 weist in montiertem Zustand einen innerhalb der Aufnahme 14 liegenden Abschnitt 19 mit zwei einander radial gegenüberliegenden abgeflachten Bereichen 21 und senkrecht zu diesen zwei einander radial gegenüberliegenden kreiszylinderförmigen Bereichen 22 auf. Die kreisbogenförmigen Bereiche 22 sind an ihren Außenseiten jeweils mit einer entlang der Längsachse 17 gestuften Geradverzahnung 23 versehen und radial elastisch verformbar ausgebildet. An den Abschnitt 19 anschließend weist das Halteelement 16 zum Frontend 12 hin einen zylinderförmigen Abschnitt 24 auf. Das Halteelement 16 ist mit einer Durchgangsöffnung 26 versehen, die im Querschnitt im wesentlichen rechteckförmig ausgebildet ist. Am freien Ende des Abschnitts 24 ist ein radial elastisch verschwenkbarer Haken 27 angeformt.

Die Aufnahme 14 ist im Schnitt quer zur Längsachse 17 U-förmig ausgebildet, wobei die Schenkel radial zur Längsachse 17 vom Gehäuse 10 wegweisen. Die Schenkel der Aufnahme 14 sind durch zwei Begrenzungswände 28, 29 gebildet, die an ihren einander gegenüberliegenden Flächen jeweils eine der Verzahnung 23 am Halteelement 16 entsprechende Geradverzahnung 31 aufweisen. Die Aufnahme 14 ist zwischen den nach außen weisenden Enden der Begrenzungswände 28, 29 offen. Die Aufnahme kann jedoch auch im Querschnitt in der Form eines Langlochs ausgebildet werden, wobei der Durchmesser der Aufnahme 14 in einem Mittelschnitt parallel zu den beiden Wänden 28, 29 größer ist als ihr Durchmesser in einem Mittelschnitt senkrecht zu den Wänden 28, 29. Die Aufnahme 14 weist zum Frontend 12 hin eine quer zur Längsachse 17 angeordnete Abschlußwand 32 mit einer Bohrung 33 auf.

Zur Montage ist das Halteelement 16 in einer Drehstellung, in der seine abgeflachten Bereiche 21 zu den Wänden 28, 29 weisen, in die Aufnahme 14 in Richtung seiner Längsachse 17 einschiebbar. Der zylinderförmige Abschnitt 24 tritt dabei durch die Bohrung 33 in der Abschlußwand 32 der Aufnahme zum Frontend 12 hindurch, so daß das Halteelement 16 drehbar gehalten ist. Der Haken 27 federt nach Durchtritt durch die Bohrung 33 nach außen, so daß das Halteelement 16 verliersicher in der Aufnahme 14 gehalten ist. Durch Drehen um seine Längsachse 17 ist das Halteelement 16 in der Aufnahme 14 in beliebigen Stellungen entlang seiner Längsachse 17 festlegbar, in denen dessen Verzahnung 23 in Eingriff mit der Verzahnung 31 der Aufnahme 14 kommen kann. Der Durchmesser der Aufnahme 14 im Bereich ihrer Verzahnung 31 ist etwas geringer als der Durchmesser des Halteelements 16 im Bereich seiner Verzahnung 23, so daß das Halteelement 16 und/oder die Aufnahme beim Festlegen radial elastisch verformt wird und sich in der Aufnahme 14 verspannt und ein unbeabsichtigtes Lösen des Halteelements bei der weiteren Montage des Scheinwerfers verhindert ist. Die Drehbewegung des Haltelements 16 ist beim Festlegen desselben durch eine an der Aufnahme 14 angeformte, radial nach innen weisende und als ein Anschlag dienende Nase 34 so begrenzt, daß das Halteelement 16 nicht um mehr als 90° gedreht werden kann.

Durch das Halteelement 16 wird als Befestigungselement eine Schraube 36 gesteckt, die sich mit ihrem Kopf 37 an der Stirnseite des Halteelements 16 abstützt, mit ihrem Gewindeabschnitt durch eine Öffnung 38 im Frontend 12 hindurchtritt und am Frontend mittels einer Mutter 39 befestigbar ist. Der Durchmesser der Schraube 36 ist wesentlich kleiner als die lichte Weite der Durchgangsöffnung 26.

Bei der Anbringung des Scheinwerfers am Frontend 12 wird der Scheinwerfer zunächst in Richtung der Längsachse 17 des Kraftfahrzeugs ausgerichtet, indem die Lichtscheibe 11 beispielsweise bezüglich des Verlaufs der Karosserieaußenfläche oder der Strahlrichtung des vom Scheinwerfer abgegebenen Lichts korrekt ausgerichtet wird. Hierbei wird ein bestimmter Abstand zwischen der Halterung 10 und dem Karosserieteil 12 eingestellt und die Halteelemente 16 befinden sich in den Aufnahmen 14 in bestimmten Stellungen entlang ihrer Längsachse 17. In diesen Stellungen werden die Halteelemente 16 durch Drehen um ihre Längsachse 17 in den Aufnahmen 14 festgelegt. Mittels der Schrauben 36 ist der Scheinwerfer in dieser Stellung am Frontend 12 gehalten, ist jedoch quer zu den Längsachse 17 der Halteelemente 16 noch verstellbar, da die Schrauben 36 mit großem radialem Spiel durch die Halteelemente 16 hindurchtreten, um eine Höhen- sowie Seiteneinstellung des Scheinwerfers zu ermöglichen. Ist auch die Höhen- sowie Seiteneinstellung des Scheinwerfers erfolgt, so werden die Muttern 39 endfest angezogen und der Scheinwerfer wird somit sicher am Frontend 12 gehalten. Bei einem späteren Ausbau des Scheinwerfers brauchen nur die Schrauben 36 gelöst zu werden, nicht jedoch die Halteelemente 16, die in den Aufnahmen 14 in ihren korrekten Stellungen verbleiben. Beim Wiedereinbau des Scheinwerfers braucht dann nur die Höhen- und Seiteneinstellung neu durchgeführt zu werden, nicht jedoch die Einstellung des Scheinwerfers in Richtung der Längsachse 17.

Die Aufnahme kann auch am Frontend angeordnet sein, wobei das Gehäuse des Scheinwerfers am Halteelement zur Anlage kommt und die durch das Halteelement hindurchtretende Schraube am Gehäuse mittels einer Mutter festlegbar ist. Außerdem kann der Scheinwerfer auch als Einsatzscheinwerfer ausgeführt sein, der über einen als Halterung dienenden Tragrahmen am Frontend festlegbar ist, wobei die Aufnahmen dann am Tragrahmen angeordnet sind.

## Patentansprüche

1. Scheinwerfer für Kraftfahrzeuge, der eine Halterung (10) aufweist, die über mehrere Lagerstellen (13) an einem Karosserieteil (12) des Kraftfahrzeugs festlegbar ist, wobei wenigstens einer Lagerstelle (13) ein Halteelement (16) zugeordnet ist, über das die Halterung (10) am Karosserieteil (12) zur Anlage kommt und das in einer Aufnahme (14) der Halterung (10) oder des Karosserieteils (12) in verschiedenen Längsstellungen festlegbar ist, und wobei durch das Halteelement (16) ein Befestigungselement (36) mit radialem Spiel hindurchtritt, das sich am Halteelement (16) abstützt und durch das die Halterung (10) am Karosserieteil (12) befestigbar ist, dadurch gekennzeichnet, daß das Halteelement (16) auf einem Teil seines Außenumfangs zylinderförmig ausgebildet und mit einer Verzahnung (23) versehen ist, die entlang der Verstellrichtung des Halteelements (16) gestuft ist, daß die Aufnahme (14) mit einer ebenfalls entlang der Verstellrichtung des Halteelements (16) gestuften Verzahnung (31) versehen ist, daß das Halteelement (16) in wenigstens einer Drehstellung in der Aufnahme (14) in Verstellrichtung bewegbar ist und daß das Halteelement (16) in der Aufnahme (14) um eine sich parallel zur Verstellrichtung erstreckende Achse (17) drehbar ist, wodurch zur Festlegung des Halteelements (16) dessen Verzahnung (23) mit der Verzahnung (31) der Aufnahme (14) in Eingriff kommt.

2. Scheinwerfer nach Anspruch 1, dadurch gekennzeichnet, daß das Halteelement (16) mittels einer an seinem zylindrischen Außenumfang angebrachten, in Verstellrichtung des Halteelements (16) gestuften Verzahnung (23), die in eine Verzahnung (31) einer Aufnahme (14) am Karosserieteil (12) oder an der Halterung (10) eingreift, festlegbar ist.

3. Scheinwerfer nach Anspruch 2, dadurch gekennzeichnet, daß das Halteelement (16) einen Abschnitt (19) mit zwei einander radial gegenüberliegenden abgeflachten Bereichen (21) und zwei einander radial gegenüberliegenden kreiszylinderförmigen Bereichen (22) mit der Verzahnung (23) aufweist und daß die Aufnahme (14) an zwei einander radial gegenüberliegenden Wänden (28, 29) ihre Verzahnung (31) aufweist und im Querschnitt ihre lichte Weite zwischen den Wänden (28, 29) geringer ist als senkrecht dazu, wobei das Halteelement (16) in einer Drehlage, in der seine abgeflachten Bereiche (21) zur Verzahnung (31) der Aufnahme (14) weisen, in die Aufnahme (14) einschiebbar ist und durch Drehen um seine Längsachse (18) seine Verzahnung (23) in Eingriff mit der Verzahnung (31) der Aufnahme (14) bringbar ist.

4. Scheinwerfer nach Anspruch 3, dadurch gekennzeichnet, daß die Aufnahme (14) im Querschnitt U-förmig ausgebildet ist, wobei die Wände (28, 29) die Schenkel bilden und die Aufnahme (14) an den von der Halterung (10) wegweisenden Enden der Wände (28, 29) offen ist.

5. Scheinwerfer nach einem der Ansprüche 2 bis 4, dadurch gekennzeichnet, daß das Halteelement (16) einen zylinderförmigen Abschnitt (24) aufweist und mit diesem durch eine Öffnung (33) in der Aufnahme (14) zum Karosserieteil (12) hindurchtritt.

6. Scheinwerfer nach Anspruch 5, dadurch gekennzeichnet daß im Endbereich des zylinderförmigen Abschnittes (24) des Halteelements (16) ein radial elastisch verformbarer Haken (27) angeformt ist, der nach Durchtritt des Abschnittes (24) durch die Öffnung (33) radial nach außen federt.

7. Scheinwerfer nach einem der vorstehenden Ansprüche, dadurch gekennzeichnet, daß das Halteelement (16) eine im Querschnitt etwa rechteckförmige Durchgangsöffnung (26) für das Befestigungselement (36) aufweist.

8. Scheinwerfer nach einem der Ansprüche 3 bis 7, dadurch gekennzeichnet, daß ein an der Aufnahme (14) angeordneter Anschlag (34) die Drehung des Halteelements (16) in Befestigungsrichtung begrenzt.

9. Scheinwerfer nach einem der vorstehenden Ansprüche dadurch gekennzeichnet, daß das Halteelement (16) und/oder die Halterung (10) aus Kunststoff besteht.

10. Scheinwerfer nach einem der vorstehenden Ansprüche, dadurch gekennzeichnet, daß die Halterung als ein Gehäuse (10) ausgebildet ist.

11. Scheinwerfer nach einem der Ansprüche 1 bis 9, dadurch gekennzeichnet, daß die Halterung als ein Tragrahmen ausgebildet ist.

## Claims

1. A headlamp for motor vehicles, exhibiting a mounting (10) which can be secured via a plurality of bearing points (13) to a body part (12) of the motor vehicle, at least one bearing point (13) being assigned a holding element (16) via which the mounting (10) comes to bear against the body part (12) and which, in a receiving fixture (14) of the mounting (10) or of the body part (12), can be secured in various longitudinal settings, and the holding element (16) being passed through with radial play by a fastening element (36), which is supported against the holding element (16) and by which the mounting (10) can be fastened to the body part (12), wherein the holding element (16) is configured cylindrically on part of its outer periphery and is provided with a toothing (23) which, along the direction of shift of the holding element (16), is stepped, wherein the receiving fixture (14) is provided with a toothing (31) which likewise, along the direction of shift of the holding element (16), is stepped, wherein the holding element (16), in at least one rotary setting, is movable in the receiving fixture (14) in the direction of shift, and wherein the holding element (16) is rotatable in the receiving fixture (14) about an axis (17) extending parallel to the direction of shift, whereby, for the securement of the holding element (16), the toothing (23) of the latter enters into engagement with the toothing (31) of the receiving fixture (14).

2. The headlamp as claimed in claim 1, wherein the holding element (16) can be secured by means of a toothing (23) fitted to its cylindrical outer periphery and stepped in the direction of shift of the holding element (16), which toothing (23) engages in a toothing (31) of a receiving fixture (14) on the body part (12) or on the mounting (10).

3. The headlamp as claimed in claim 2, wherein the holding element (16) exhibits a segment (19) having two radially opposing flattened-off regions (21) and two radially opposing circular-cylindrical regions (22) exhibiting the toothing (23), and wherein the receiving fixture (14) exhibits its toothing (31) on two radially opposing walls (28, 29) and, in cross section, its clear width between the walls (28, 29) is smaller than perpendicular thereto, the holding element (16), in a rotary position in which its flattened-off regions (21) point towards the toothing (31) of the receiving fixture (14), being able to be slid into the receiving fixture (14) and, by rotation about its longitudinal axis (18), its toothing (23) being able to be brought into engagement with the toothing (31) of the receiving fixture (14).

4. The headlamp as claimed in claim 3, wherein the receiving fixture (14) is of U-shaped configuration in cross section, the walls (28, 29) forming the side arms, and the receiving fixture (14) being open at those ends of the walls (28, 29) pointing away from the mounting (10).

5. The headlamp as claimed in one of claims 2 to 4, wherein the holding element (16) exhibits a cylindrical segment (24) and passes with this, through an opening (33) in the receiving fixture (14), to the body part (12).

6. The headlamp as claimed in claim 5, wherein, in the end region of the cylindrical segment (24) of the holding element (16), a radially elastically deformable hook (27) is integrally formed on, which, following the passage of the segment (24) through the opening (33), springs radially outwards.

7. The headlamp as claimed in one of the preceding claims, wherein the holding element (16) exhibits a pass-through opening (26) of approximately rectangular cross section for the fastening element (36).

8. The headlamp as claimed in one of claims 3 to 7, wherein a stop (34) disposed on the receiving fixture (14) limits the rotation of the holding element (16) in the direction of fastening.

9. The headlamp as claimed in one of the preceding claims, wherein the holding element (16) and/or the mounting (10) consists of plastic.

10. The headlamp as claimed in one of the preceding claims, wherein the mounting is configured as a housing (10).

11. The headlamp as claimed in one of claims 1 to 9, wherein the mounting is configured as a supporting frame.

## Revendications

1. Phare pour véhicules automobiles, équipé d'un support (10) fixé en plusieurs points (13) sur une pièce (12) de la carrosserie du véhicule, un élément de maintien (16), associé à au moins un point de fixation (13), assurant le contact du support (10) sur la partie (12), cet élément pouvant être fixé dans un logement (14) du support (10) ou de la pièce (12) de la carrosserie dans différentes positions longitudinales et étant traversé, avec jeu radial, par un élément (36) qui s'appuie sur l'élément (16) et qui permet de fixer le support (10) et la pièce (12) de la carrosserie, caractérisé en ce que l'élément de maintien (16), sur une partie de son enveloppe externe, a une forme cylindrique et porte une denture (23) étagée selon la direction de réglage de l'élément (16), le logement (14) portant également une denture (31) étagée selon la direction de réglage de l'élément (16), cet élément pouvant, par rotation au moins, être déplacé à l'intérieur du logement (14) dans la direction de réglage, cette rotation s'effectuant autour d'un axe (17), parallèle à la direction de réglage et permettant d'amener en prise les dentures (23) et (31) du logement (14) et de fixer ainsi l'élément de maintien (16).

2. Phare selon la revendication 1, caractérisé en ce que l'élément de maintien (16) peut être fixé par l'intermédiaire d'une denture (23) portée par son enveloppe cylindrique et étagée selon la direction de réglage de l'élément (16), cette denture venant en prise avec une denture (31) d'un logement (14) de la pièce (12) de la carrosserie ou du support (10).

3. Phare selon la revendication 2, caractérisé en ce que l'élément de maintien (16) comporte une partie (19) présentant deux zones aplaties radialement opposées (21) et deux zones cylindriques circulaires (22) portant la denture (23), tandis que le logement (14) porte sa denture (31) sur deux parois radialement opposées (28, 29), qui en coupe transversale délimitent un espace libre plus étroit que selon la direction perpendiculaire, de sorte que l'élément (16), lorsqu'il est tourné de manière que ses zones aplaties (21) soient dirigées vers la denture (31) du logement (14), peut être glissé dans le logement (14), puis tourné autour de son axe longitudinal (18) de manière à amener la denture (23) en prise avec la denture (31) du logement (14).

4. Phare selon la revendication 3, caractérisé en ce que le logement (14) présente en coupe transversale la forme d'un U dont les parois (28, 29) sont les branches, le logement (14) étant ouvert aux extrémités des parois (28, 29) éloignées du support (10).

5. Phare selon une des revendications 2 à 4, caractérisé en ce que l'élément de maintien (16) comporte une partie cylindrique (24) qui traverse une ouverture (33) pratiquée dans le logement (14) du côté de la pièce de carrosserie (12).

6. Phare selon la revendication 5, caractérisé en ce que l'élément de maintien (16) comporte, à l'extrémité de sa partie cylindrique (24) un crochet moulé (16) déformable élastiquement dans le sens radial et qui, après que la partie (24) ait traversé l'ouverture (33), se relève élastiquement vers l'extérieur.

7. Phare selon une des revendications précédentes, caractérisé en ce que l'élément de maintien (16) comporte une ouverture de passage (26), à section transversale sensiblement carrée, destinée à recevoir l'élément de fixation (36).

8. Phare selon une des revendications 3 à 7, caractérisé en ce que le logement (14) porte une butée (34) limitant la rotation de l'élément de maintien (16) dans le sens de fixation.

9. Phare selon une des revendications précédentes, caractérisé en ce que l'élément de maintien (16) et/ou le support (10) est en matière plastiqué.

10. Phare selon une des revendications présidentes, caractérisé en ce que le support est constitué par un boîtier (10).

11. Phare selon une des revendications 1 à 9, caractérisé en ce que le support est constitué par un cadre porteur.
